# EUROPEAN PATENT APPLICATION

(11) **EP 1 475 146 A1**
(43) Date of publication of application: **10.11.2004**
(21) Application number: 03703344.6
(22) Date of filing: 14.02.2003
(51) Int. Cl.: B01J 20/20, C01B 31/08

(54) **ADOSRBENT AND PROCESS FOR PRODUCING ADSORBENT**

(30) Priority: 15.02.2002 JP 2002038644; 03.06.2002 JP 2002160877
(71) Applicant: ARACO KABUSHIKI KAISHA, Toyota-shi, Aichi-ken 473-8512 (JP)
(72) Inventor: KONDO, Takashi, Toyota-shi, Aichi 473-8512 (JP); EBATA, Yasutaka, Toyota-shi, Aichi 473-8512 (JP)
(74) Representative: Pratt, David Martin
(86) International application number: PCT/JP2003/001532
(87) International publication number: WO 2003/068386

(57) **Abstract**

Akenaf core pulverized preparation obtained by a pulverization treatment 10 is dissolved in 70% sulfuric acid in an acid dissolving treatment 20 to obtain a glucide phase (sugar/sulfuric acid solution). The glucide phase is separated from a lignin phase (lignin sulfate) by a centrifuging treatment 30. The glucide phase is heated in the presence of sulfuric acid at 90°C for about 2 hours by an acid heating treatment40. Further, dilution of theglucide (residue) with water and filtration are carried out until a filtrate becomes neutral by a water diluting and filtering treatment 50. Washing with water and drying of the glucide are performed by a water washing and drying treatment 60. Thereafter, a sugar char that serves as an adsorbent A is obtained by a calcining treatment 70.

## Description

### [TECHNICAL FIELD]

The present invention relates to an adsorbent made from plant material as a raw material and to a production technology for such an adsorbent.

### [BACKGROUND ART]

Usually, a synthetic zeolite-based adsorbent is used for selectively adsorbing a specified gas from a mixed gas. Such a synthetic zeolite-based adsorbent has a high proportion of pores that contribute to gas adsorption performance, for example, 1.0 nm or less micropores (pores having a micro order diameter), and thus has an excellent adsorption selectivity for the mixed gas. However, while an adsorbent of this kind has a high adsorption selectivity for a mixed gas, there is a limit due to keeping the production cost at low levels.

Then, in gas adsorption it has been conceived to use an adsorbent made from plant material as araw material, for example, activated carbon. Such an adsorbentisgenerally produced bysimplysubjecting a plant material to a calcination treatment or the like. Such a calcination treatment results in the formation of a number of pores in a particle of char. Those pores closely relate to the adsorption of various components. Such an adsorbent can be produced at a lower cost than that of the synthetic zeolite-based adsorbents. However, the adsorbent made from a plant material as a raw material has a problem in that it has a lower adsorption selectivity for a mixed gas than that of the synthetic zeolite-based adsorbents. This is because the adsorbent of thi s kind has a lower proportion of micropores (pores having a micro order diameter) that contribute to gas adsorption as compared with synthetic zeolite-based adsorbents for example.

### [DISCLOSURE OF THE INVENTION]

It is an object of the present invention to provide an adsorbent that is made from plant material as a raw material and has excellent adsorption performance, and to provide a production technology for the same adsorbent.

The inventors of the present invention have conceived of a way to increase the adsorption performance of an adsorbent made from plant material as a rawmaterial to be as high as that of synthetic zeolite-based adsorbents. The inventors have made extensive studies on an adsorbent made from plant material as a raw material, a production technology therefor, and the like. As a result, the inventors have successfully found that a thermoplastic lignin contained in a plant material serves as an inhibitory factor for pore formation in char particles in calcination treatments. In addition the reasonable removal of the lignin makes it possible to increase the adsorption selectivity for a mixed gas.

One solving method for achieving the above-mentioned object is to comprise an adsorbent mainly of a sugar char that is a carbonized glucide from a plant material as the raw material.

The "plant material" as used herein refers broadly to ligneous material, i.e. woody material such as conifers and broadleaf trees and herbaceous materials such as kenaf. By using such plant material as the raw material, the production cost can be kept at low levels as compared with other adsorbents, for example, synthetic zeolite-based adsorbents.

Further, the adsorbent according to the solving method is of a composition consisting mainly of a sugar char, that is, composed primarily of a sugar char. "Consisting mainly of" as used herein includes the case where the adsorbent contains minute amounts of components other than the sugar char. Furthermore, "sugar char" as used herein is obtained by carbonizing the glucide contained in a plant material. In particular, in the solving method, the sugar char preferably is one that is obtained by decomposing the glucide contained in a plant material into a low molecular weight substance and then carbonizing it.

To explain more specifically on this point, a plant material inherently contains in addition to the glucide (sugar related component), lignin (lignin related component) as another main component. Therefore, an adsorbent, obtained by simply subjecting a plant material to a carbonization treatment (char) , contains lignin and other components in addition to the sugar char. In contrast, the present invention is characterized by an adsorbent composition in which components other than the sugar char are excluded as much as possible. Such an adsorbent can be obtained by removing those components other than glucides, such as lignin for example, from the plant material and then subjecting the glucide to a calcination treatment to carbonize it. The lignin has thermoplasticity, and hence the lignin adheres to the sugar char during the calcination treatment. This can be an inhibitory factor in the formation of pores that contributes to the adsorption performance. When the formation of pores is inhibited, pore volume, specific surface area, etc. of the adsorbent are decreased, with the result being a decrease in the adsorption performance of the adsorbent. Accordingly, in order to obtain an adsorbent that consists mainly of a sugar char, such as one according to the present invention, calcination treatment of a component that consists mainly of a glucide (having a decreased molecular weight) makes it possible to advantageously form pores that contribute to adsorption performance, thereby realizing an adsorbent with excellent adsorption performance. That is, subjecting a component consisting mainly of a glucide with a decreased molecular weight to calcination treatment can realize an adsorbent that has an increased proportion in particular of 1.0 nm or less micropores increased to the level of that of the synthetic zeolite-based adsorbent, and can therefore realize an adsorbent with a high adsorption selectivity for a mixed gas.

It is preferable that a herbaceous material be used as the plant material that serves as a raw material for the adsorbent. Specifically, it is preferable to use kenaf. A herbaceous material such as kenaf can be produced by cultivation so that the herbaceous material is conducive to the protection of forest resources, improvement of the global environment, and so forth, more than dowoody materials such as conifers and broadleaf woods. Therefore, use of a herbaceous material, in particular kenaf which is easy to cultivate and grows relatively fast, can provide an adsorbent that is friendly to the global environment.

Further, the solving method can provide adsorbents with a pore size distribution having an optimum around a pore radius of 0.4 nm. It has been confirmed that these adsorbents can selectively adsorb relatively small hydrocarbon molecules.

For example, adsorbents that selectively adsorb methane can be provided. The adsorbents according to the solving method can have a significantly increased adsorption capability as compared with conventional adsorbents and thus are considered to be effective as adsorbents for methane. Regarding the form of such adsorbents, adsorbents that have pore size distributions having an optimum pore radius around of 0.35 nm for example, can be provided. Also, adsorbents that selectively adsorb butane can be provided. Regarding the form of such adsorbents, adsorbents that have pore size distributions having an optimum pore radius around 0.45 nm for example, can be provided.

Another solving method for achieving the above-mentioned object is a production method that uses a plant material as the raw material, and includes: a step of removing lignin; a step of extracting a glucide; and a step of calcination.

In the step of removing lignin, the lignin, which is a component other than the glucide and is inherently contained in the plant material, is removed. The "glucide" as used herein refers to a component related to saccharides and broadly includes polysaccharides such as cellulose, monosaccharides, and various other sugars. The "lignin" as used herein widely includes various components related to lignin. By the step of removing lignin, main components other than glucides can be removed to obtain a lignin- free glucide phase. The lignin has thermoplasticity and hence adheres to a sugar char during the calcination treatment described hereinafter. The lignin serves as an inhibitory factor in the formation of pores that contribute to the adsorption performance. Therefore, removal of the lignin can increase the adsorption performance of an adsorbent. Specific modes of the step of removing lignin include a mode in which sulfuric acid is added to a plant material to separate and remove the lignin by acid dissolution, a mode in which a plant material is subjected to a combined process consisting of a nitric acid treatment and an alkali treatment (a so-called nitric acid method), a mode in which plant material is subjected to a treatment with a hydrotropic salt solution (a so-called hydrotropic method), and so forth.

In the step of extracting a glucide, the glucide is extracted from the glucide phase obtained in the step of removing lignin. In the glucide phase, the glucide, after lignin is removed, a solvent, and so forth used in the preceding step, are contained. In the step, the glucide phase is separated into a glucide and components other than glucide, thereby purifying the glucide. Specific mode of the step of extracting a glucide includes, for example, a mode in which the glucide phase is heat-treated in the presence of sulfuric acid to dehydrate the glucide by the dehydration action of sulfuric acid, and subsequently precipitate the glucide.

In the step of calcination, the purified glucide is subjected to calcination treatment at high temperatures, for example, around 750°C, thereby forming a sugar char. This affords an adsorbent consisting mainly of the sugar char. That is, the calcination treatment allows pores, which have an adsorbing function, to be formed on a surface of the sugar char. By preliminarily removing components other than the glucide and then carrying out the calcination treatment as in the method of the present invention, pores can be formed having high adsorption performance. In particular, the resultant adsorbent has a proportion of 1.0 nm or less micropores at substantially the same level as that of the micropores in the synthetic zeolite-based adsorbent. Specifically, the adsorbent has a high adsorption selectivity to a mixed gas.

Further, use of plant material as a raw material makes it possible to keep the production cost at a lower level as compared with synthetic zeolite-based adsorbent for example. Moreover, lignin typically has high industrial or commercial utilization values while the other glucide phase produced in the process of extraction of the lignin (by-product) is frequently treated as a waste product. Therefore, production of an adsorbent from the glucide phase, which is a by-product, as a raw material results in a decrease in the cost of the raw material for the adsorbent and a reduction in the cost for the disposal of the glucide phase. This is a great savings particulary in view of the cost. As described above, the solving method makes it possible to produce an adsorbent using plant material as a raw material and in addition produce an adsorbent having excellent adsorption performance.

Further, in accordance with another solving method, it is preferable that the method includes a step of activating treatment after the step of extracting a glucide or after the step of calcining. The "activating treatment" as used herein is carried out as follows. For example, dehydrating a mixture of a glucide or a char and an alkali reagent at 300 to 500°C and then calcining it at 600 to 800°C to form a calcined body. Further, sufficiently washing with water to remove the alkali reagent from the calcined body. The step of activating treatment allows the adsorbent made according to the solving method to have a high proportion of micropores in particular, so that the adsorbent may have a high adsorption selectivity to a mixed gas.

Further, in accordance withanother solving method, in the above-mentioned step of extracting a glucide, initially carried out is a step in which the glucide phase is subjected to acid heating in the presence of sulfuric acid, to precipitate the glucide. For example, the treatment may be performed at about 90°C for 2 hours. In this treatment, the glucide in the glucide phase is precipitated due to the dehydration action of sulfuric acid. Then, a step of separating the precipitated glucides from the glucides phase is performed. For example, the glucides may be filtered by a filtration treatment using a filter and are recovered as a residue. Upon the filtration treatment, it is preferable that the sulfuric acid solution adhered to the glucides be washed off with water. This can provide a component that is substantially composed of glucides. Therefore, a relatively simple treatment enables extraction of the glucides from the glucides phase.

By still another solving method, the above-mentioned step of removing lignin includes at least a step of first separating a plant material into a lignin phase and a glucides phase. In this step, sulfuric acid in a concentration of 70% , for example,is added to a plant material, preliminarily subjected to a pulverization treatment, in order to have the plant material dissolved in the sulfuricacid. Itispreferablethataddition proportion ofsulfuric acid to the plant material be determined depending on the amount of the lignin contained therein. As a result, a lignin phase and a glucides phase with a decreased molecular weight are formed separately each other due to a hydrolysis action caused by an acid dissolving treatment. On this occasion, the lignin phase becomes a solid phase that contains lignin. The glucides phase becomes a liquid phase in which the glucides are mixed with the sulfuric acid solution. Therefore, the lignin can be easily removed from the glucides by subsequently performing solid-liquid separation. The solid-liquid separating operation can be performed by using various kindsofcentrifugesorfilters. Therefore, thelignincanberemoved from the plant material that is used as a raw material by a relatively simple treatment.

Sequential treatment of the glucides phase with a decreased molecular weight, obtained by the step of removing lignin in the step of extracting glucides and the step of calcining as already described, can provide an adsorbent consisting mainly of a sugar char that is a carbonized glucide with a decreased molecular weight.

Furthermore, in another solving method, use of kenaf as a raw material can produce an adsorbent that is friendly to the global environment.

Still further, particularly in a production method that includes the step of an activating treatment, it is possible to significantly increase the methane adsorption amount or the butane adsorption amount of the adsorbent as compared with that of a conventional adsorbent. Hence, the resultant adsorbent is considered to be an effective adsorbent for methane or butane.

As one mode of the step of an activating treatment for increasing the methane adsorption amount, a method is described in which potassium hydroxide is used in the same weight as that of the above-mentioned dried glucide or sugar char . Also, as one mode of the step of an activating treatment for increasing the butane adsorption amount, a method is described inwhich potassium hydroxide, as the above-mentioned basic hydroxide, is added to dried glucide in a weight range of 3 times or more to 7 times or less than that of the dried glucide or potassium hydroxide, as the above-mentioned basic hydroxide, is added to sugar char in a weight range of 7 times or more to 12 times or less than that of the sugar char.

Other objects, features and advantages of the present invention will be better understood by reading the description of examples and claims with reference to the attached drawings.

### [BRIEF DESCRIPTION OF THE DRAWINGS]

Fig. 1 is a diagram that shows an outline of production steps of adsorbents A to C according to one embodiment;
Fig. 2 is a graph that illustrates a relationship between micropore radius and pore volume with respect to adsorbents A, D, and E;
Fig. 3 is a graph that illustrates a relationship between micropore radius and pore volume with respect to adsorbents B, C, and D;
Fig. 4 is a graph that illustrates a relationship between adsorption equilibrium pressure and methane adsorption amount with respect to adsorbents A to D; and
Fig. 5 is a graph that illustrates a relationship between adsorption equilibrium pressure and butane adsorption amount with respect to adsorbents F, G, and H.

### [BEST MODE FOR CARRYING OUT THE INVENTION]

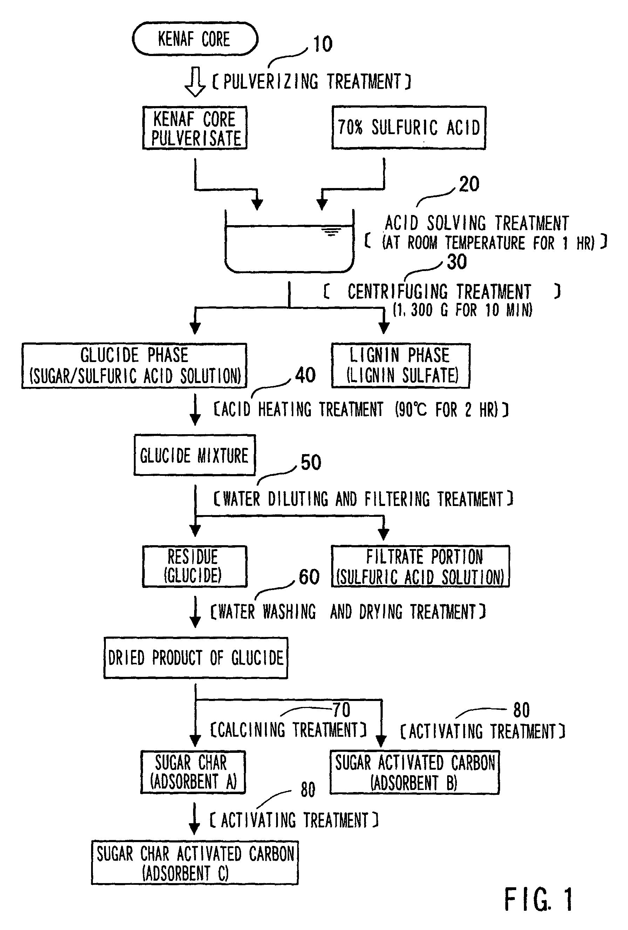

Fig. 1 is a diagram that shows an outline of the production steps of adsorbents A to C, F, and G according to one embodiment. In this embodiment, an explanation will be made for the situation where adsorbents A to C, F, and G are produced from kenaf(one kind of plant material) as a raw material.

In this embodiment, adsorbents A to C, F, and G are produced by sequentially carrying out a treatment step as shown in Fig. 1.

This step includes a pulverization treatment 10, an acid dissolving treatment 20, a centrifuging treatment 30, an acid heating treatment 40, a water diluting and filtering treatment 50, a washing and drying treatment 60, a calcining treatment 70, and an activating treatment 80. Hereinafter, details of these treatments will be described with reference to Fig. 1.

### [Pulverization treatment]

In the pulverization treatment 10, a treatment is carried out in which a core portion of kenaf, i.e., a so-called kenaf core, is pulverized. By using various kinds of pulverizers, kenaf core pulverization can obtain a preparation with a particle size of about 1 mm or less. Note that according to this embodiment the kenaf that serves as a raw material for adsorbent A contains glucide (polysaccharides such as cellulose), lignin, and so forth.

### [Acid dissolving treatment]

In the acid dissolving treatment 20, sulfuric acid in a concentration of about 70% is added to the kenaf core pulverization preparation obtained in the pulverization treatment 10. Then, the kenaf core pulverization preparation is dissolved in the sulfuric acid for a period of about 1 hour at room temperature. It is preferred that the addition proportion of sulfuric acid may be determined depending up on the amount of lignin contained with in the kenaf core. In this embodiment, an excessive amount of sulfuric acid than sufficient for dissolving lignin from the kenaf core is added. As a result, the lignin contained in the kenaf core reacts with the sulfuric acid portion to form a glucide phase, that is a liquid phase (sugar/sulfuric acid solution), and a lignin phase, that is a solid phase (lignin sulfate), in a mixed solution. Further in the acid dissolving treatment 20, a part of the glucide such as cellulose, which is apolysaccharide, is converted to have a decreased molecular weight due to hydrolysis. That is, a part of the glucide becomes various kinds of glucides with low molecular weights, such as hemicellulose, disaccharides, and monosaccharides.

Note that in the acid dissolving treatment 20, the acid is not limited to sulfuric acid. Various kinds of concentrated acids can be used. Preferably, the same kind of acid as that used in the acid heating treatment 40, that corresponds to the step of extracting a glucide that will be described hereinbelow, is used. Therefore the number of different chemicals required for the treatment can be decreased, and the recovery and the reuse of the acid become easier.

### [Centrifuging treatment]

In the centrifuging treatment 30, the mixed solution obtained in the acid dissolving treatment 20 is centrifuged into a glucide phase (saccharide/sulfuric acid solution) and a lignin phase (lignin sulfate). For example, the centrifuging treatment may be performed under the conditions of a separation acceleration of 1,300 G for about 10 minutes. This enables the removal of the lignin contained in the kenaf (raw material). Note that the removed lignin is widely used industrially and commercially in a number of applications.

The acid dissolving treatment 20 and centrifuging treatment 30 in this embodiment constitute the step of removing lignin. That is, in the present invention the acid dissolving treatment 20 corresponds to the "step of separating a plant material into a lignin phase and a glucide phase" in the solving method, and the centrifuging treatment 30 corresponds to the "step of solid-liquid separating a lignin phase from a glucide phase".

Note that in such a process of removing lignin, the obtained glucide is converted to one having a lower molecular weight than previously due to hydrolysis with the acid. However, a different step of removing lignin where the lignin is removed without decomposing cellulose may also be used.

### [Acid heating treatment]

In the acid heating treatment 40, the glucide phase (sugar/sulfuric acid solution) obtained in the centrifuging treatment 30 is heated, for example, at 90°C for about 2 hours, or at 180°C for 1 hour. That is, the glucide phase is heated in the presence of sulfuric acid, which allows a hydrolysis action. As a result, the glucide in the glucide phase is dehydrated and precipitated in the solution. Note that in the process of the acid heating treatment 40, the glucide is converted into a condition where a portion of the glucide is carbonized and forms a state where a portion of the glucide molecules aggregate with each other (a mode in which the glucide molecules are easily filtered in the filtration treatment described hereinbelow). That is, a portion of the glucide loses hydroxyl groups, etc. by the dehydration reaction to decrease the hydrophilicity of the glucide, thereby causing precipitation of the glucide. On this occasion, the glucide molecules (a modified glucide having a changed structure due to dehydration or the like) are precipitated in the form of particles. In particular, an acid heating treatment performed so as to bring the reaction system into a uniform state allows the glucide to be precipitated as particles having a more uniform particle diameter.

### [Water diluting and filtering treatment]

In the water diluting and filtering treatment 50, the glucide phase obtained in the acid heating treatment 40 is dispersed by dilution with water, using an amount that is 3 times as much as the glucide phase. Then the diluted liquid is separated into a residue (glucide) and a filtrate (sulfuric acid solution) with a glass filter. Note a main object of the step of the water diluting and filtering treatment 50 is to wash the glucide. Therefore, the water diluting operation and filtering operation are repeatedly performed until the pH of the filtrate reaches about 7 (neutral). The residue obtained by this filtering treatment (glucide) is substantially free of components other than the glucide, so that the residue is effective for obtaining an adsorbent that consists mainly of a glucide.

As described above, the acid heating treatment 40 and the water diluting and filtering treatment 50 in this embodiment constitute the step of extracting a glucide. That is, the acid heating treatment 40 corresponds to the "step of precipitating a glucide in a glucide phase" in the solving method, and the water diluting and filtering treatment 50 corresponds to the "step of solid-liquid separating the precipitated glucide from other components" in the solving method.

Note that the "step of precipitating the glucide in the glucide phase" is not limited to the water diluting and filtering treatment 50, but various kinds of treatments that can remove acid may be applied. For example, a gasifying treatment may also be used in which the sulfuric acid is gasified and removed by heating, and the glucide is partly or wholly carbonized. Alternatively, a filtering treatment or the like may be performed after a neutralization treatment with an alkaline compound.

### [Water washing and drying treatment]

In the water washing and drying treatment 60, the glucide (residue) obtained in the water diluting and filtering treatment 50 is again washed with water. Thereafter, the glucide is dried, for example, at 105°C for 48 hours. As a result, a dry product of glucide is obtained. Note that the dry product glucide can also be obtained by water washing the glucide (residue) obtained in the water diluting and filtering treatment 50 and then freezing and drying the glucide. Note that a method for obtaining the dry product of glucide is not limited to the steps of extracting a glucide according to this embodiment, but the dry product of glucide can be obtained by various kinds of methods based on any known or well-known technology. Preferably, a method is used in which the glucide is obtained as a dry product in the form of particles as in this embodiment, in particular, as uniform particles. The dry product of glucide obtained in the step of extracting a glucide (also referred to as "glucide dried product" or simply "driedproduct" in this specification) is a modified glucide that is dehydrated and modified by the above-mentioned acid heating treatment 40.

### [Calcining treatment]

In the calcining treatment 70, the dried product obtained in the water washing and drying treatment 60 is subjected to a calcining treatment under a nitrogen atmosphere at about 750°C. As a result, a sugar char in a completely carbonized state (adsorbent A in this embodiment) can be prepared. This sugar char is obtained by carbonization in the calcining treatment 70 of the glucide whose molecular weight has been decreased in the acid dissolving treatment 20. In the process of the calcining treatment, a number of pores that closely relate to the adsorption performance of the glucide are formed on a surface of the glucide. As a result, the adsorbent A is obtained of a construction that consists mainly of a sugar char. In the calcining treatment, in particular, when the dried product of glucide is in the form of particles, pores are well formed. When the particles are uniform, more uniform pores tend to be formed.

### [Activating treatment]

In the activating treatment 80, the dried product obtained by the water washing and drying treatment 60, or the sugar char obtained by the calcining treatment 70, is mixed with potassium hydroxide in, for example, at least the same amount as that of the obtained dried product or sugar char, to form a mixture. Then, the mixture is diluted with water in a volume range of 0 to 6 times that of the mixture to form a mixed aqueous solution. After the mixed aqueous solution is stirred for 2 hours, the mixed aqueous solution is left to stand in a drier adjusted to 105°C to remove moisture and obtain a dry body.

Note that in place of potassium hydroxide, basic hydroxides may be used such as sodium hydroxide and calcium hydroxide.

Here, the more of the dehydrating agentadded, that is, the basic hydroxide, the more significant the formation of pores. When the amount of the basic hydroxide to be added is small, lesser pores are formed. On the other hand, when the amount of the basic hydroxide is large, larger pores, that is, pores with enlarged diameters, are formed. Specifically, addition of potassium hydroxide in a weight range greater than 0 but 2 or less times that of the dried product of glucide or sugar char, (preferably the same amount as that of the dried product of glucide or sugar char, or in other words, a weight proportion of 1:1 based on the weight of dried product of glucide or sugar char) results in formation of a number of pores with a pore radius of around 0.35 nm. Such a sugar char can selectively adsorb methane at atmospheric pressure.

Further, if potassium hydroxide is added in a weight proportion of 1:3 to 1:7, preferably in a weight proportion of 1:5 based on the weight of dried product of glucide, or in a weight proportion of 1:7 to 1:12, preferably in a weight proportion of 1:10 based on the weight of sugar char, a number of pores with a pore radius of around 0.45 nm can be formed. Note that the sugar char can be obtained in a yield of generally about 50% based on the weight of the dried product of glucide. Therefore, activated carbon having many pores with a pore radius of around 0.45 nm can be obtained by performing an activating treatment by addition of potassium hydroxide in a weight proportion of 1: 4 to 1: 6 in terms of the weight of the dried product of glucide to either one of the dried product of glucide or sugar char. Such a sugar char can selectively adsorb butane at atmospheric pressure. Further, at a higher pressure, for example, at 150 atm, it is expected that such a sugar char can well adsorb gas molecules smaller than methane.

As described above, by adjusting the amount of the dehydrating agent with respect to the dried product of glucide or sugar char, the pore size can be controlled. Therefore, it is expected that the addition of potassium hydroxide to, for example, sugar char in a weight proportion within the range of 1:2 to 1:3 can provide activated carbon that can selectively adsorb ethane or propane. Further, it is expected that by controlling the amount of potassium hydroxide, activated carbons that selectively adsorb molecules with various sizes, such as isopropane, isobutene and t-butane, can be obtained. Furthermore, it is possible that activated carbons can be made to selectively adsorb not only such alkanes and hydrocarbons but also a gas such as hydrogen, water vapor, or the like.

Next, the obtained dried body is subj ected to a heat treatment at 750°C for 5 hours in a nitrogen atmosphere to convert the dried body to char. Further, the char is mixed with a 5-mol/1 hydrochloric solution and then stirred for 48 hours for washing, thereby removing the alkali portion from the char. Thereafter, the char and a filtrate portion (hydrochloric acid solution) are separated from each other by usinga glass filter for example. Finally, the char is gained asa dried product in the same manner as in the above-mentioned water washing and drying treatment.

Note that in the case of the dried product of glucide that is subjected to the activating treatment 80 without passing through the calcining treatment 70, such a heat treatment can be deemed as also serving as a calcining treatment.

Note that the activating treatment can be performed using a known chemical activation method, such as activation with zinc chloride or activation with phosphoric acid, in addition to activation with alkali, or a known gas activation method. The activation with alkali is preferable since this activation increases the surface area of the char significantly so as to give a greater adsorption capacity.

Here, the obtained dried product is a so-called activated carbon that is converted from the dried product or sugar char prior to theactivating treatment. Formed on the surface of the activated carbon are a number of pores that contribute to the adsorption performance of the activated carbon. The substance obtained by subjecting the dried product to an activating treatment becomes a light activated carbon like sponge and has a small specific gravity. On the other hand, the substance obtained by subjecting the sugar char to the activating treatment has a greater specific gravity than that of the substance obtained by subjecting the dried product to the activating treatment. Note that the substance obtained by adding the same amount of potassium hydroxide to the dried product, obtained in the water washing and drying treatment 60, to effect the activating treatment is hereafter described as an adsorbent B (sugar activated carbon). The substance obtained by adding the same amount of potassium hydroxide to the sugar char, obtained in the calcining treatment 70, to effect the activating treatment is hereafter described as an adsorbent C (sugar char activated carbon) . The substance obtained by adding potassium hydroxide in an amount 5 times that of the dried product, obtained in the water washing and drying treatment 60, to effect the activating treatment is hereafter described as an adsorbent F. The substance obtained by adding potassium hydroxide to the sugar char, obtained in the calcining treatment 70, in an amount 10 times that of the sugar char (on potassium hydroxide in an amount of 5 times that of the dried product of glucide due to the yield from the dried product of glucide being defined as 50% of the yield of sugar char) to effect the activating treatment is hereafter described as an adsorbent G.

### [Example]

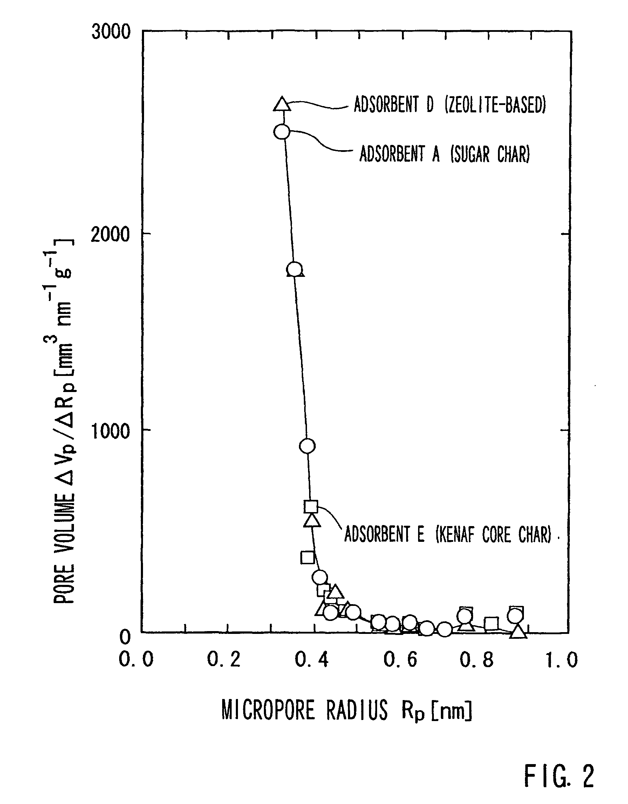

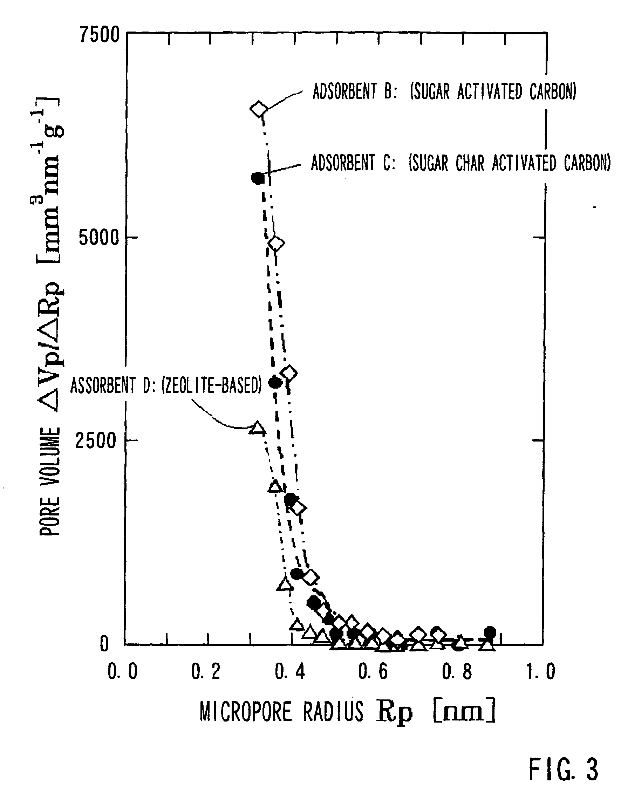

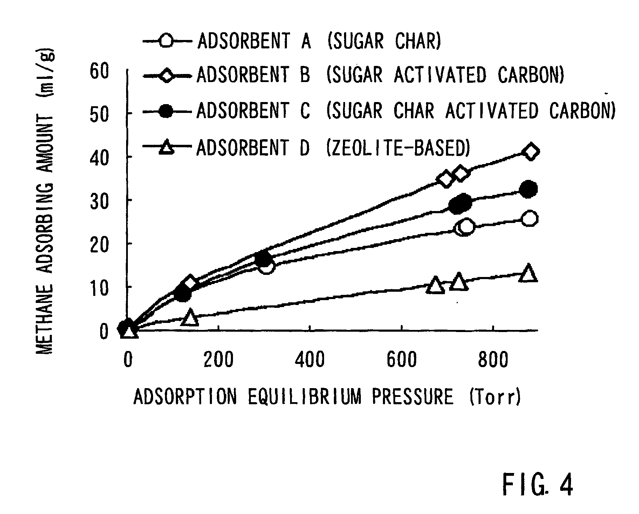

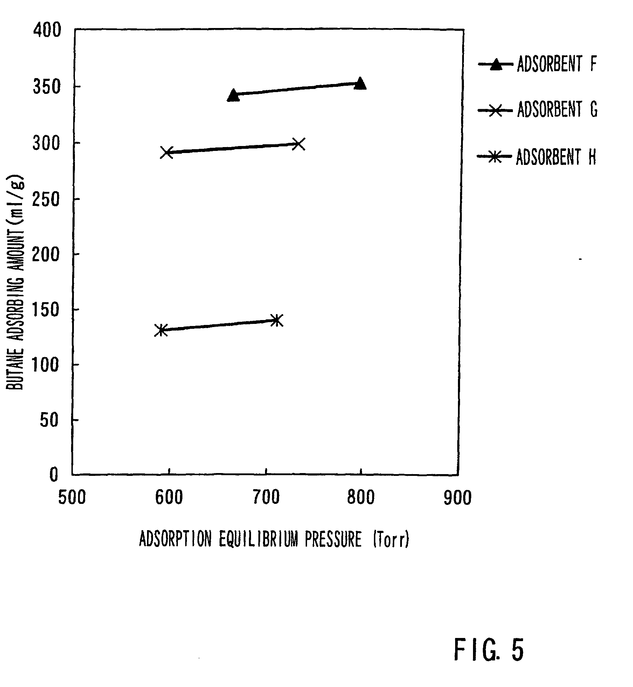

Adsorbents A to C, F, and G, obtained by sequentially performing the above-mentioned treatments were evaluated on indices related to their adsorption performance. For this evaluation, measurements were performed of indices relating to the adsorption performance such as distribution of micropores, total volume of micropores, specific surface area of the adsorbent, and measurement of actual adsorption amounts for methane and butane. Hereinaf ter, one example of the results of such measurements will be described. Note that Figs. 2 and 3 are graphs that illustrate respective relationships between pore size (micropore radius) of the adsorbents A to C and pore volume. Fig. 4 is a graph that illustrates a relationship between adsorption equilibrium pressure and methane adsorption amount with respect to adsorbents A to C. Fig. 5 is a graph that illustrates a relationship between adsorption equilibrium pressure and butane adsorption amount with respect to adsorbents F to H.

Further, the production conditions for the adsorbents A to C, F, and G relating to this solving method are summarized below.

AdsorbentA: (1) Akenafcorematerialpulverizedtoaparticle size of about 1 mm or less was dissolved in 70% sulfuric acid at room temperature over about 1 hour and the reaction mixture was centrifuged at 1,300 G for 10 minutes to separate a solid portion.

(2) the liquid phase obtained in (1) above was heated at 90°C for 2 hours and then the reaction mixture was diluted with a threefold amount of water , and filtered through a glass filter. The solid portion was washed with water and dried.

(3) the solid portion dried in (2) above was calcined in an N₂ atmosphere at about 750°C for 1 hour to obtain an adsorbent A.

Adsorbent B: The dried product of glucide obtained by the operations (1) to (2) above was combined with the same weight of potassium hydroxide. The resultant was diluted with 6 times the weight of water, followed by mixing and dissolution. Thereafter, the resultant was dried at 105°C.

(4) The obtained solid portion was calcined in an N₂ atmosphere at 750°C for about 5 hours. To the resultant was added 100 ml of a 5-mol/l hydrochloric acid. The mixture was stirred for 48 hours, and then filtered and washed with water to obtain an adsorbent B.

Adsorbent C: The sugar char obtained by the operations (1) to (3) above was combined with the same weight of potassium hydroxide. The resultant was diluted sixfold with water, followed by mixing and dissolution. Thereafter, the mixture was dried at 105°C.

An adsorbent C was obtained by operation (4).

Adsorbent F: (6) the liquid phase obtained in (1) above was heated at 180°C for 1 hour and then diluted with water threefold. The obtained reaction mixture was filtered through a glass filter. The solid portion was washed with water and dried.

5 g of the solid portion (dried product of glucide) obtained in (6) above was combined with 25 g of potassium hydroxide and 50 ml of water. The mixture was stirred at room temperature for 2 hours and then dried at 105°C.

Thereafter, an adsorbent F was obtained by operation (4) above.

Adsorbent G: The solid portion obtained by the operations up to (6) above was calcined at 750°C for 1 hour to obtain a sugar char.

5 g of the sugar char was combined with 50 g of potassium hydroxide and 100 ml of water. The resultant was stirred at room temperature for 2 hours. Then, the mixture was dried at 105°C.

Thereafter, by the same operations as described above except that in (4) above, 200 ml of a 5-mol/l hydrochloric acid was used to obtain an adsorbent G.

### [Pore size distribution of micropores]

The pore size distribution of micropores readily indicates the adsorption performance of an adsorbent. The pore size distribution of micro pores can be shown by using the relationship between the radius (Rₚ [nm]) of a micropore and pore volume ΔVₚ/ΔRₚ [mm³nm⁻¹g⁻¹], as shown in Fig. 2.

In Figs. 2 and 3, adsorbents D and E are presented as comparative examples for the adsorbents A to C according to this embodiment. Here, the adsorbent D relates to zeolite (Zeolam A-5, manufactured by Tosoh Corporation) , and the adsorbent E is obtained by subjecting kenaf core to calcining treatment without removing lignin (treating temperature: 1,000°C) (kenaf core char). In Fig. 2, data relating to the adsorbent A are indicated by ○ plots, the data relating to the adsorbent D are indicated by Δ plots, and the data relating to the adsorbent E are indicated by □ plots. Further, in Fig. 3, the data relating to the adsorbent B are indicated by ◇ plots, the data relating to the adsorbent C are indicated by • plots and the data relating to the adsorbent D are indicated by Δ plots. Note that each of the data relating to the adsorbents A to E were obtained by analyzing measured data measured by a constant volume gas adsorption method, a so-called MP method.

As shown in Figs. 2 and 3, the pore volumes of the micropores of the adsorbents A, B, and C have optimal values between 0.3 nm and 0.4 nm. This indicates that the adsorbents A, B and C can selectively adsorb gases with molecular sizes around 0.4 nm or less. For example, they are particularly effective for selectively adsorbing methane gas and gases having molecular sizes around the molecular size of methane. Comparison of the adsorbent A with the adsorbent D reveals that the pore size distribution of the micropores of the adsorbent A is substantially the same as that of the adsorbent D, indicating that the adsorbent A has a similar adsorption performance. On the other hand, comparison of the adsorbent A with the adsorbent E indicates that subjecting a glucide to a calcining treatment after removal of lignin gives rise to a greater pore volume than a case where the calcining treatment is carried out without removing lignin. Further, comparison of the adsorbents B and C with the adsorbent A reveals that subjecting a glucide to an activating treatment before or after the calcining treatment significantly increases the pore volume.

### [Total volume of micropores]

Total volumes V_{q} [mm³g⁻¹] of micropores relating to the adsorbents A to E were measured by a t-plot method. As a result of the measurements for example, a value of 190 [mm³g⁻¹] was obtained for the adsorbent A, a value of 590 [mm³g⁻¹] for the adsorbent B, a value of 382 [mm³g⁻¹] for the adsorbent C, a value of 196 [mm³g⁻¹] for the adsorbent D, and a value of 60 [mm³g⁻¹] for the adsorbent E. This indicates that theadsorbent A has a greater total volume of micropores than that of the adsorbent E and a similar total volume to that of the micropores of the adsorbent D. Further, it reveals that the adsorbents B and C have significantly greater total volume than those of other adsorbents.

### [Specific surface area]

Specific surface areas S_{BET} [m²g⁻¹] of the adsorbents A to E were measured by a BET plot method. As a result of the measurements, for example, a value for the specific surface area of 534 [m²g⁻¹] was obtained for the adsorbent A, a value of 1,468 [m²g⁻¹] for the adsorbent B, a value of 1,028 [m²g⁻¹] for the adsorbent C, a value of 529 [m²g⁻¹] for the adsorbent D, and a value of 142 [m²g⁻¹] for the adsorbent E. This indicates that the adsorbent A has a greater specific surface area than that of the adsorbent E. The adsorbent A has a similar specific surface area to that of the adsorbent D.

### [Methane adsorbing amount]

To confirm the effects on the methane absorbing capacity of the pore size distribution of micropores, total volume of micropores, and specific surface area of adsorbent, the methane adsorbing amount of the adsorbents A to D were measured. The measurements were carried out using a high-precision full automatic gas adsorbing apparatus (manufactured by Bel Japan, Inc.). As a pretreatment, samples of the adsorbents A to D were heat-treated at 250°C for 3 hours under evacuation. Thereafter, the methane adsorbing amounts of the samples were measured under various adsorption equilibrium pressures at an adsorption temperature of 298K for an equilibrium time of 500 seconds. Note that the methane adsorbing amounts were calculated by a known volume method using state equations of gases. The results are shown in Fig. 4. In Fig. 4, the horizontal axis indicates an adsorption equilibrium pressure and the vertical axis indicates the methane adsorbing amount.

Regarding the symbols used in Fig. 4, as in Figs. 2 and 3, data relating to the adsorbent A are indicated by ○ plots and data relating to the adsorbent B are indicated by ◇ plots. Data relating to the adsorbent C are indicated by • plots, and data relating to adsorbent D are indicated by Δ plots.

As illustrated in Fig. 4, the adsorbents A, B, and C indicate adsorption amounts of 2 to 4 times that of the adsorbent D (which is a comparative example) and the adsorption amounts of the adsorbents A, B, and C, are high at each adsorption equilibrium pressure. Therefore, it can be seen that adsorbents obtained by this solving method have a greater methane adsorbing capacity than synthetic zeolite, which is the adsorbent that is typically used. Further, the greater methane adsorbing amounts of the adsorbents B and C as compared to that of the adsorbent A indicate that adsorbents subjected to an activating treatment, after a water washing and drying treatment or after a calcining treatment, have a higher methane adsorbability than adsorbents not subjected to an activating treatment.

Here, comparing the adsorbents B and C both subjected to the activating treatment, the adsorbent B, subjected to the activating treatment 80 without passing through the calcining treatment 70, had a greater methane adsorbing amount at the equilibrium adsorption pressure as compared with the adsorbent C, subjected to the activating treatment 80 after the calcining treatment 70. Therefore, adsorbent B has a higher methane adsorbing efficiency per unit weight than adsorbent C.

### [Butane adsorbing amount]

The adsorbents F and G were measured for a butane adsorbing amount in the same manner as used in the measurement of methane adsorbing amount, except that butane was used. In addition, measurement of adsorbent H, which was activated carbon obtained by subjecting coal to an activating treatment (activated carbon used for canisters of an automobile), was measured for a butane adsorbing amount as a comparative example by a similar method. The results are shown in Table 5 and Fig. 5. Regarding the symbols in Fig. 5, data relating to the adsorbent F are indicated by ▲ plots, data relating to the adsorbent G are indicated by × plots, data relating to the adsorbent H are shown by * plots.

| | Adsorption equilibrium pressure / Torr | Butan adsorbing amount / ml/g |
|---|---|---|
| Adsorbent F | 595.58 | 341.970 |
| | 732.20 | 352.405 |
| Adsorbent G | 663.02 | 291.160 |
| | 794.87 | 298.510 |
| Adsorbent H (Commercial product) | 690.75 | 130.736 |
| | 710.47 | 139.650 |

AS illustrated in Fig. 5, it can be seen that the adsorbents F and G exhibited adsorbing amounts of about 2 to about 2.5 times as much as that of the adsorbent H at each adsorption equilibrium pressure. Therefore, the adsorbents obtained by the detailed solving method have greater butane adsorbing capacity than that of typically used adsorbents. In addition, like the case of methane adsorption with regard to the adsorbents B and C, the adsorbent F has a greater butane adsorption amount per unit weight than the adsorbent G. The results indicate that activating treatments performed before calcining treatments can increase adsorbability per unit weight. Further, between the adsorbent F and the adsorbent G, the adsorbent F has a smaller specific gravity and is bulkier than the adsorbent G. The butane adsorbing amount per unit weight is greater in the case of the adsorbent G that has been subjected to the activating treatment after the calcining treatment.

As describe above, according to this embodiment, adsorbents A to C, F, and G can be produced that are made from kenaf, which is a plantmaterial , as a rawmaterial and exhibit excellent adsorption capabilities. The adsorbent A has a pore size distribution that is similar to that of the adsorbent D as shown in Fig. 1. The total volume V_{q} and the specific surface area S_{BET} of microspores are approximately equivalent as those of the adsorbent D. Therefore, the adsorbent A has an equivalent adsorption performance as that of the adsorbent D, thus exhibiting high adsorption selectivity for a mixed gas.

Further, with regard to the adsorbents B and C, in particular, the proportion of 1.0 nm or less micropores, the total volume V_{q} of micropores, and the specific surface area S_{BET} of micropores, are at higher levels than the adsorbent D. In addition, regarding the adsorbability for methane, the adsorbents B and C have higher absorbability for methane than the adsorbent D. Therefore, the adsorbents B and C have high adsorption selectivity for a mixed gas as compared with the adsorbent D. Also, they have higher adsorbing amounts than that of the adsorbent D.

Furthermore, the adsorbents F and G are superior to the conventional adsorbent H with respect to butane adsorbabilities. That is, a more uniform dried product of glucide in the form of particles canbe obtainedby the step of extracting a glucide according to the solving method and by precipitating due to an acid heating treatment.The more uniform dried product of glucide can provide a char that has a number of pores with more uniform pore size through an activating treatment and a calcining treatment. In particular, an activating treatment performed under severer conditions with a larger amount of potassium hydroxide broadens the pore size by the heat treatment related to the activating treatment and increases the proportion of 1.0 nm or less micropores and provides activated carbon having greater size of micropores than those of the adsorbents B and C. This can be supported from the sizes of the molecules as adhered substances selected by the adsorbents B and C and those selected by the adsorbents F and G.

Furthermore, according to this embodiment, production of the adsorbent A from a glucide phase that is a by-product produced in the process of extracting lignin as a raw material is effective for decreasing the cost of the raw material of the adsorbent A and for reducing the cost of disposing the glucide phase.

Note that the solving method is not limited to the above-mentioned embodiment but various applications and modifications can be considered within the scope of the claims.

As described above, according to the present invention, adsorbents can be realized that are produced from a plant material as a raw material and have excellent adsorption capabilities. A production technology for the above adsorbents can also be realized.

## Claims

1. An adsorbent produced from a plant material as a raw material, **characterized in that** the adsorbent consists mainly of a sugar char derived from a carbonized glucide.

2. An adsorbent produced from a plant material as a raw material, **characterized in that** the adsorbent consists mainly of a sugar char derived from a carbonized glucide with a decreased molecular weight.

3. An adsorbent according to claim 1 or 2, **characterized in that** kenaf is used as the plant material.

4. An adsorbent according to any one of claims 1 to 3, **characterized in that** the adsorbent has a pore size distribution having an optimum around a pore radius of 0.4 nm.

5. An adsorbent according to any one of claims 1 to 3, **characterized in that** the adsorbent selectively adsorbs methane.

6. An adsorbent according to any one of claims 1 to 3, **characterized in that** the adsorbent selectively adsorbs butane.

7. A production method for producing an adsorbent from a plant material as a raw material, **characterized in that** the method comprises:
a lignin removal step of removing lignin from the plant material;
a glucide extraction step of extracting a glucide from a glucide phase obtained in the lignin removal step; and
a calcination step of calcining the glucide obtained in the glucide extraction step to obtain an adsorbent that consists mainly of a sugar char.

8. A production method according to claim 7, **characterized in that** the method comprises an activating treatment step of subjecting a dried product of glucide that has passed through the glucide extraction step or the sugar char that has passed through the calcination step to an activating treatment.

9. A production method according to claim 8, **characterized in that** the activating treatment step comprises the steps of:
adding a basic hydroxide to the dried product of glucide or sugar char; and
subjecting the dried product of glucide or sugar char, to which the basic hydroxide is added, to a calcining treatment.

10. A production method according to any one of claims 7 to 9, **characterized in that** the glucide extraction step comprises the steps of:
acid heating the glucide phase in the presence of sulfuric acid to precipitate the glucide in the glucide phase; and
solid-liquid separating the precipitated glucide from components other than the precipitated glucide.

11. A production method according to any one of claims 7 to 10, **characterized in that** the lignin removal step comprises the steps of:
adding sulfuric acid to the plant material to separate the plant material into a lignin phase that contains lignin and a glucide phase that contains the glucide by acid dissolution; and
solid-liquid separating the lignin phase from the glucide phase.

12. A production method according to any one of claims 7 to 11, **characterized in that** kenaf is used as the plant material.

13. A production method according to claim 8, **characterized in that** in the activating treatment step, potassium hydroxide as the basic hydroxide is added to the dried product of glucide or sugar char in a weight of two times or less that of the dried product of glucide or sugar char to obtain an adsorbent that selectively adsorbs methane.

14. A production method according to claim 8, **characterized in that** in the activating treatment step, potassium hydroxide as the basic hydroxide is added to the dried product of glucide in a weight of 3 times or more but 7 times or less that of the dried product of glucide, or to the sugar char in a weight proportion of 7 times or more but 12 times or less that of the sugar char, to obtain an adsorbent that selectively adsorbs butane.
